# DEMANDE DE BREVET EUROPEEN

(11) **EP 4 406 693 A1**
(43) Date de publication de la demande: **31.07.2024**
(21) Numéro de dépôt: 24153440.3
(22) Date de dépôt: 23.01.2024
(51) Int. Cl.: B23P 19/04, B65C 9/18, B65C 9/36, B65H 37/00, B25J 15/06, B25J 11/00

(54) **DISPOSITIF DE DÉPOSE D'AU MOINS UNE PASTILLE ADHÉSIVE SUR UN ÉLÉMENT DE VÉHICULE AUTOMOBILE**

(30) Priorité: 26.01.2023 FR 2300713
(71) Demandeur: ADHEX TECHNOLOGIES, 21300 Chenôve (FR)
(72) Inventeur: LUIZARD, François, 21000 DIJON (FR); DURAND, Hervé, 21000 DIJON (FR); RAPENNE, Emmanuel, 21850 SAINT APOLLINAIRE (FR)
(74) Mandataire: Cabinet Bleger-Rhein-Poupon

(57) **Abrégé**

Dispositif de dépose (1) d'au moins une pastille adhésive (2) sur un élément de véhicule automobile, ce dispositif de dépose (1) comporte, d'une part, une platine (3) qui s'étend selon un plan, d'autre part, des moyens de dépose (4) d'au moins une pastille adhésive (2) sur un élément de véhicule automobile, d'autre part encore, des moyens de montage en déplacement (5) des moyens de dépose (4) d'au moins une pastille adhésive (2) en déplacement par rapport à ladite platine (3) et, d'autre part aussi, des moyens d'entraînement en déplacement (6) des moyens de dépose (4) d'au moins une pastille adhésive (2) par rapport à la platine (3).

Ce dispositif de dépose (1) est caractérisé en ce que les moyens de montage en déplacement (5) comportent des moyens de montage en rotation (50) qui sont configurés pour monter les moyens de dépose (4) d'au moins une pastille adhésive (2) en rotation par rapport à la platine (3) et autour d'un axe de rotation (X), tandis que les moyens d'entraînement en déplacement (6) comportent des moyens d'entraînement en rotation (60) qui sont configurés pour entraîner les moyens de dépose (4) d'au moins une pastille adhésive (2) en rotation autour de l'axe de rotation (X).

## Description

L'invention concerne un dispositif de dépose d'au moins une pastille adhésive sur un élément de véhicule automobile.

La présente invention concerne le domaine de la fabrication des dispositifs qui sont configurés pour déposer, de manière automatique et sur un élément de véhicule automobile, une pastille adhésive qui, au préalable, a été prélevée auprès d'un dispositif de délivrance conçu pour délivrer au moins une telle pastille adhésive, notamment à partir d'un ensemble, dont une partie est enroulée sous la forme d'un rouleau, et qui comporte une bande ainsi qu'une pluralité de pastilles adhésives collées sur cette bande.

Cette invention trouvera une application appropriée lorsqu'il s'agit de saisir au moins une telle pastille adhésive auprès d'un dispositif de délivrance d'au moins une telle pastille adhésive, de déplacer au moins une telle pastille adhésive saisie en un endroit approprié d'un substrat, et d'appliquer ladite au moins une telle pastille adhésive sur ce substrat.

Sans n'y être aucunement limitée, l'invention trouvera une application particulièrement appropriée lorsqu'il s'agit de déposer au moins une telle pastille adhésive sur un substrat qui adopte la forme d'un élément de véhicule automobile, plus particulièrement un élément de carrosserie de véhicule automobile, plus spécifiquement lorsqu'il s'agit d'obturer une ouverture que comporte un tel élément de véhicule automobile avec une telle pastille adhésive.

On connait, d'ores et déjà, un certain nombre de dispositifs de dépose d'une telle pastille adhésive.

En particulier, par le document DE102018217921, on connait un système de dépose d'au moins une pastille adhésive qui comporte, d'une part, un dispositif de délivrance d'au moins une pastille adhésive et, d'autre part, un dispositif de dépose d'au moins une telle pastille adhésive. Ce dispositif de dépose d'au moins une pastille adhésive comporte, d'une part, des moyens de préhension d'une telle pastille adhésive et, d'autre part, des moyens de montage en translation de ces moyens de préhension, ceci entre une position rétractée et une position déployée. Le système de dépose est, alors, configuré pour positionner le dispositif de délivrance à l'aplomb du dispositif de dépose, plus particulièrement à l'aplomb des moyens de préhension qui adoptent une position rétractée. Le système de dépose est, encore, configuré pour assurer la saisie d'au moins une pastille adhésive par les moyens de préhension en position rétractée. Le système de dépose est, ensuite, configuré pour déplacer le dispositif de délivrance par rapport au dispositif de dépose, ceci après que ladite au moins une pastille adhésive ait été saisie par les moyens de préhension. Le système de dépose est, également, configuré pour déplacer en translation les moyens de préhension, ceci à partir de la position rétractée vers la position déployée dans laquelle les moyens de préhension déposent la pastille adhésive saisie sur un substrat.

Ce système de dépose présente un certain nombre d'inconvénients. En particulier, ce système de dépose est particulièrement encombrant et peu maniable. De plus, le dispositif de dépose de ce système de dépose peut adopter uniquement un nombre limité de positions (à savoir une position rétractée et une position déployée). Il en découle que ce système de dépose peut déposer des pastilles adhésives uniquement en un nombre limité d'endroits d'un élément de véhicule automobile et ne peut pas déposer de telles pastilles adhésives lorsqu'un tel endroit est difficilement accessible, notamment en raison de la configuration de l'élément de véhicule automobile. Une solution consiste à déplacer l'élément de véhicule automobile par rapport au système de dépose ce qui nécessite, alors, des moyens supplémentaires qui permettent un tel déplacement. Lorsque l'élément de véhicule automobile est constitué par une carrosserie de véhicule automobile, cette solution s'avère complexe et particulièrement onéreuse.

La présente invention se veut de remédier aux inconvénients des dispositifs de dépose d'au moins une pastille adhésive de l'état de la technique.

A cet effet, l'invention concerne un dispositif de dépose d'au moins une pastille adhésive sur un élément de véhicule automobile, ce dispositif de dépose d'au moins une pastille adhésive comporte, d'une part, une platine qui s'étend selon un plan, d'autre part, des moyens de dépose d'au moins une pastille adhésive qui sont configurés pour déposer au moins une pastille adhésive sur un élément de véhicule automobile, d'autre part encore, des moyens de montage en déplacement qui sont configurés pour monter les moyens de dépose d'au moins une pastille adhésive en déplacement par rapport à ladite platine et, d'autre part aussi, des moyens d'entraînement en déplacement qui sont configurés pour entraîner les moyens de dépose d'au moins une pastille adhésive en déplacement par rapport à la platine.

Ce dispositif de dépose d'au moins une pastille adhésive est caractérisé par le fait que les moyens de montage en déplacement comportent des moyens de montage en rotation qui sont configurés pour monter les moyens de dépose d'au moins une pastille adhésive en rotation par rapport à la platine et autour d'un axe de rotation tandis que les moyens d'entraînement en déplacement comportent des moyens d'entraînement en rotation qui sont configurés pour entraîner les moyens de dépose d'au moins une pastille adhésive en rotation autour de l'axe de rotation.

Selon une autre caractéristique, ces moyens de montage en rotation comportent, d'une part, au moins un logement que comportent les moyens de dépose d'au moins une pastille adhésive et, d'autre part, un arbre, qui est solidaire fixement de la platine, qui s'étend selon l'axe de rotation, qui est logé à l'intérieur dudit au moins un logement, et par rapport auquel les moyens de dépose d'au moins une pastille adhésive sont mobiles en rotation autour dudit axe de rotation.

Une caractéristique additionnelle concerne le fait que les moyens d'entraînement en rotation comportent, d'une part, des moyens d'engrènement que comportent les moyens de dépose d'au moins une pastille adhésive ou qui sont associés à ces moyens de dépose d'au moins une pastille adhésive, d'autre part, des moyens d'engrènement complémentaires qui coopèrent avec les moyens d'engrènement et, d'autre part encore, un moteur d'entraînement, qui est monté fixement sur la platine, et qui est configuré pour entraîner lesdits moyens d'engrènement complémentaires.

De manière alternative, les moyens d'entraînement en rotation comportent un moteur qui comporte, d'une part, un stator qui est solidaire fixement de la platine et, d'autre part, un rotor qui est mobile en rotation autour de l'axe de rotation ainsi que par rapport au stator tandis que les moyens de montage en rotation comportent, d'une part, au moins une partie dudit moteur et, d'autre part, des moyens de fixation qui sont configurés pour fixer les moyens de dépose d'au moins une pastille adhésive sur le rotor du moteur.

L'invention concerne, encore, une installation de dépose d'au moins une pastille adhésive sur un élément de véhicule automobile. Cette installation de dépose d'au moins une pastille adhésive comporte, d'une part, un robot qui comporte un bras mobile, d'autre part, au moins un dispositif de dépose d'au moins une pastille adhésive qui est configuré pour déposer au moins une pastille adhésive sur un élément de véhicule automobile et, d'autre part encore, des moyens de fixation qui sont configurés pour fixer ledit au moins un dispositif de dépose d'au moins une pastille adhésive sur le bras mobile du robot. Dans cette installation de dépose d'au moins une pastille adhésive, ledit au moins un dispositif de dépose d'au moins une pastille adhésive présente les caractéristiques décrites ci-dessus.

L'invention concerne, également, un système de dépose d'au moins une pastille adhésive sur un élément de véhicule automobile. Ce système de dépose d'au moins une pastille adhésive comporte, d'une part, au moins un dispositif de dépose d'au moins une pastille adhésive qui est configuré pour déposer au moins une pastille adhésive sur un élément de véhicule automobile, d'autre part, au moins un dispositif de délivrance d'au moins une pastille adhésive qui est configuré pour délivrer au moins une pastille adhésive audit au moins un dispositif de dépose d'au moins une pastille adhésive. Dans ce système de dépose d'au moins une pastille adhésive, ledit au moins un dispositif de dépose d'au moins une pastille adhésive présente les caractéristiques décrites ci-dessus.

Finalement, l'invention concerne, également, une installation de dépose d'au moins une pastille adhésive sur un élément de véhicule automobile. Cette installation de dépose d'au moins une pastille adhésive comporte, d'une part, un robot qui comporte un bras mobile, d'autre part, au moins un système de dépose d'au moins une pastille adhésive qui est configuré pour déposer au moins une pastille adhésive sur un élément de véhicule automobile et, d'autre part encore, des moyens de fixation qui sont configurés pour fixer ledit au moins un système de dépose d'au moins une pastille adhésive sur le bras mobile du robot. Dans cette installation de dépose d'au moins une pastille adhésive, le système de dépose d'au moins une pastille adhésive présente les caractéristiques décrites ci-dessus.

Ainsi, l'invention concerne un dispositif de dépose d'au moins une pastille adhésive. Ce dispositif de dépose comporte, d'une part, des moyens de montage en rotation autour d'un axe de rotation des moyens de dépose par rapport à une platine et, d'autre part, des moyens d'entraînement en rotation autour de cet axe de rotation de ces moyens de dépose. La présence de ces moyens de montage en rotation et de ces moyens d'entraînement en rotation permet aux moyens de dépose d'adopter un mouvement de rotation et de pivoter avec une amplitude angulaire importante (notamment de l'ordre de 260°) ce qui permet à ces moyens de dépose d'adopter une multitude de positions angulaires différentes. Ces moyens (de montage en rotation et d'entraînement en rotation) permettent, alors, avantageusement, aux moyens de dépose de déposer des pastilles adhésives dans un nombre particulièrement important d'endroits de dépose, notamment dans des endroits de dépose difficiles d'accès ainsi qu'à l'intérieur d'un véhicule automobile.

L'invention concerne, également, un système de dépose d'au moins une pastille adhésive sur un élément de véhicule automobile. Ce système de dépose comporte, d'une part, au moins un dispositif de dépose qui présente les caractéristiques du dispositif de dépose conforme à l'invention, d'autre part, au moins un dispositif de délivrance d'au moins une pastille adhésive à un tel dispositif de dépose.

Ces caractéristiques permettent, avantageusement, de disposer d'un système de dépose qui intègre un dispositif de délivrance et un dispositif de dépose d'au moins une pastille adhésive. Ce système de dépose permet, alors, de déposer une pluralité de pastilles adhésives, ceci de manière continue au niveau de l'élément de véhicule automobile et en passant successivement d'un endroit de dépose (de cet élément de véhicule automobile) à un autre endroit de dépose (de cet élément de véhicule automobile) d'une telle pastille adhésive sans qu'il soit nécessaire, comme dans l'état de la technique, au dispositif de dépose d'aller saisir une pastille adhésive au niveau d'un dispositif de délivrance de pastilles adhésives éloigné de l'élément de véhicule automobile.

L'invention concerne, encore, une installation de dépose d'au moins une pastille adhésive. Cette installation comporte un robot ainsi que, selon le cas, au moins un dispositif de dépose qui présente les caractéristiques décrites ci-dessus ou au moins un système de dépose qui présente les caractéristiques décrites ci-dessus. Compte tenu des caractéristiques du dispositif de dépose selon l'invention, ladite installation de dépose permet, avantageusement, de déposer des pastilles adhésives en un nombre particulièrement important d'endroits de dépose de pastilles adhésives, quoi qu'il en soit en un nombre bien plus élevé d'endroits de dépose que permettent les installations de dépose de l'état de la technique. De plus, les caractéristiques de ce dispositif de dépose permettent, avantageusement, de déposer des pastilles adhésives en des endroits difficiles d'accès, notamment en des endroits inaccessibles pour les installations de dépose de l'état de la technique, plus particulièrement en des endroits situés à l'intérieur d'une carrosserie de véhicule automobile.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

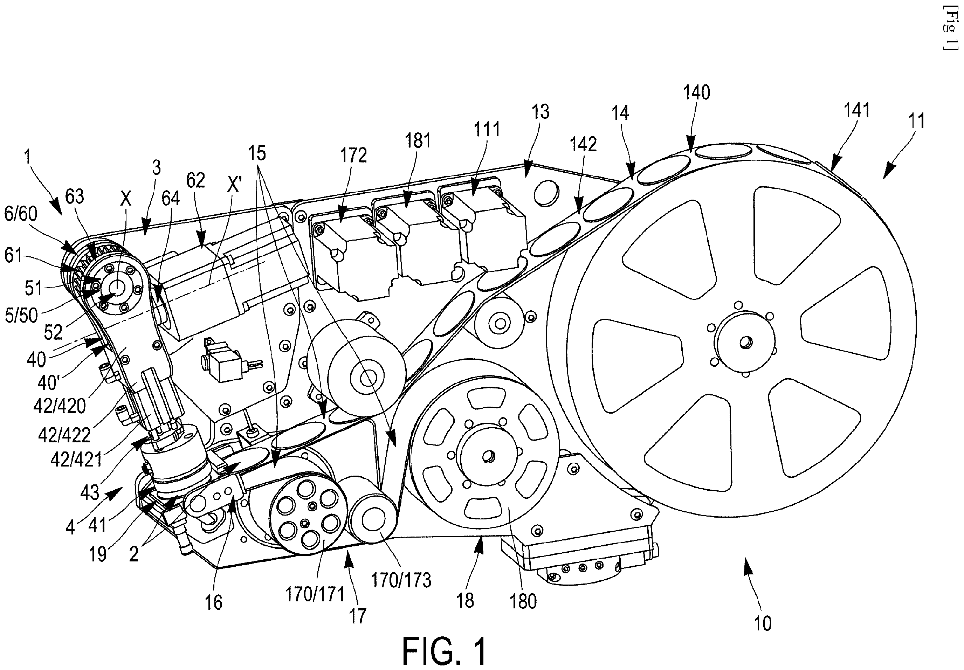

[Fig 1] est une vue schématisée et en perspective d'un système de dépose d'au moins une pastille adhésive qui comporte, d'une part, un dispositif de dépose d'au moins une pastille adhésive conforme à un premier type de réalisation de l'invention et, d'autre part, un dispositif de délivrance d'au moins une pastille adhésive à ce dispositif de dépose d'au moins une pastille adhésive.

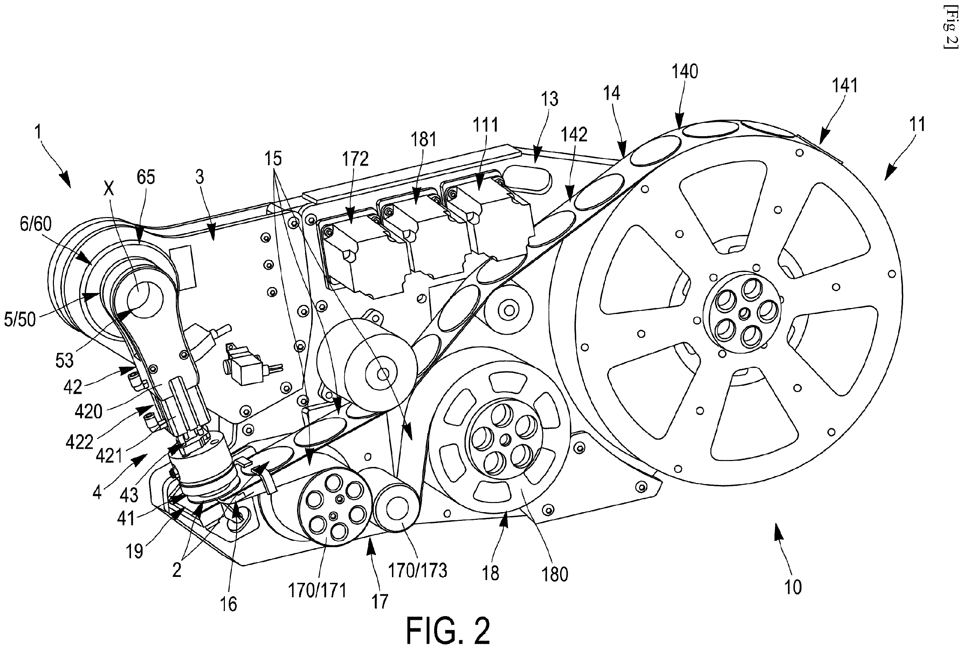

[Fig 2] est une vue schématisée et en perspective d'un système de dépose d'au moins une pastille adhésive qui comporte, d'une part, un dispositif de dépose d'au moins une pastille adhésive conforme à un deuxième type de réalisation de l'invention et, d'autre part, un dispositif de délivrance d'au moins une pastille adhésive à ce dispositif de dépose d'au moins une pastille adhésive.

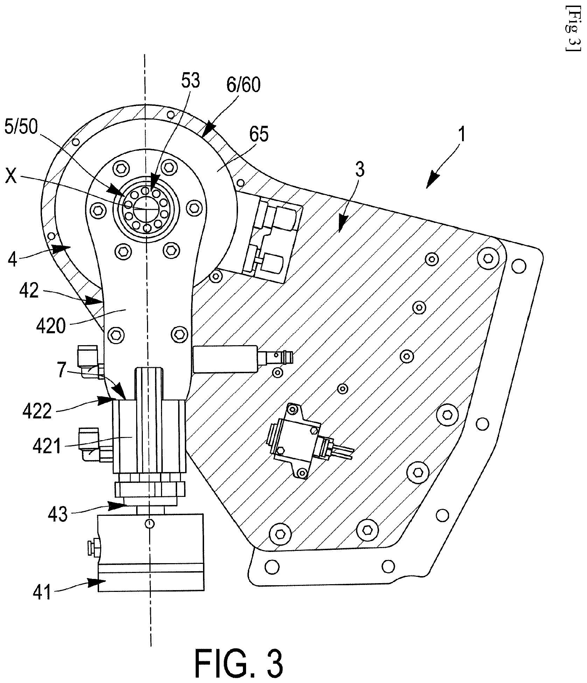

[Fig 3] est une vue schématisée et de face du dispositif de dépose d'au moins une pastille adhésive illustré figure 2.

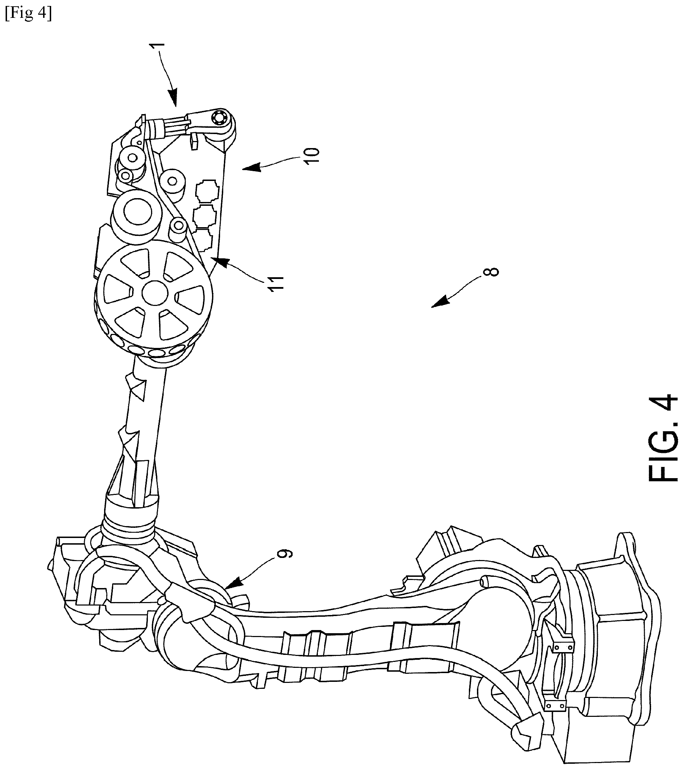

[Fig 4] est une vue schématisée et en perspective d'une installation de dépose d'au moins une pastille adhésive qui comporte un système de dépose d'au moins une pastille adhésive qui comporte un dispositif de dépose d'au moins une pastille adhésive conforme à l'invention.

En référence notamment aux figures susmentionnées, la présente invention concerne le domaine de la fabrication des dispositifs qui sont configurés pour déposer, de manière automatique et sur un élément de véhicule automobile, une pastille adhésive qui, au préalable, a été prélevée auprès d'un dispositif de délivrance conçu pour délivrer au moins une telle pastille adhésive.

La présente invention concerne, alors, un dispositif de dépose 1 d'au moins une pastille adhésive 2 sur un élément de véhicule automobile (non représenté). Une telle pastille adhésive 2 est, plus particulièrement, configurée pour obturer une ouverture, que présente ledit élément de véhicule automobile (plus particulièrement un élément de carrosserie d'un tel véhicule automobile), et qui peut être destinée à permettre l'écoulement et/ou l'évacuation d'un fluide de traitement (notamment à l'encontre de la corrosion) de cet élément de véhicule automobile.

Ce dispositif de dépose 1 d'au moins une pastille adhésive 2 comporte, d'une part, une platine 3 qui s'étend selon un plan.

D'autre part, ce dispositif de dépose 1 d'au moins une pastille adhésive 2 comporte des moyens de dépose 4 d'au moins une pastille adhésive 2 qui sont configurés pour déposer au moins une pastille adhésive 2 sur un élément de véhicule automobile (non représenté).

D'autre part encore, ce dispositif de dépose 1 d'au moins une pastille adhésive 2 comporte des moyens de montage en déplacement 5 qui sont configurés pour monter les moyens de dépose 4 d'au moins une pastille adhésive 2 en déplacement par rapport à ladite platine 3, plus particulièrement sur ladite platine 3.

D'autre part aussi, ce dispositif de dépose 1 d'au moins une pastille adhésive 2 comporte des moyens d'entraînement en déplacement 6 qui sont configurés pour entraîner les moyens de dépose 4 d'au moins une pastille adhésive 2 en déplacement par rapport à la platine 3.

Selon l'invention, les moyens de montage en déplacement 5 comportent des moyens de montage en rotation 50 qui sont configurés pour monter les moyens de dépose 4 d'au moins une pastille adhésive 2 en rotation par rapport à la platine 3 (plus particulièrement sur cette platine 3) et autour d'un axe de rotation X.

A ce propos, on observera que cet axe de rotation X est, de préférence, perpendiculaire au plan selon lequel ladite platine 3 s'étend.

Egalement selon l'invention, les moyens d'entraînement en déplacement 6 comportent des moyens d'entraînement en rotation 60 qui sont configurés pour entraîner les moyens de dépose 4 d'au moins une pastille adhésive 2 en rotation autour de l'axe de rotation X.

Tel que mentionné ci-dessus, les moyens de montage en déplacement 5 comportent des moyens de montage en rotation 50.

Selon un premier type de réalisation illustré sur la figure 1, les moyens de montage en rotation 50 comportent, d'une part, au moins un logement 51 que comportent les moyens de dépose 4 d'au moins une pastille adhésive 2 et, d'autre part, un arbre 52, qui est solidaire fixement de la platine 3, qui s'étend selon l'axe de rotation X, qui est logé à l'intérieur dudit au moins un logement 51, et par rapport auquel les moyens de dépose 4 d'au moins une pastille adhésive 2 sont mobiles en rotation autour dudit axe de rotation X.

De manière alternative, les moyens de montage en rotation 50 peuvent comporter, d'une part, un arbre, que comportent les moyens de dépose 4, qui est solidaire fixement des moyens de dépose 4, qui s'étend selon l'axe de rotation X et, d'autre part, au moins un logement, que comporte la platine, à l'intérieur duquel ledit arbre est logé, et par rapport auquel ledit arbre et/ou les moyens de dépose 4 d'au moins une pastille adhésive 2 sont mobiles en rotation autour dudit axe de rotation X.

Une caractéristique additionnelle concerne le fait que ces moyens de montage en rotation 50 peuvent, encore, comporter des moyens de roulement (non représentés) qui sont interposés entre ledit arbre 52 et, selon le cas, les moyens de dépose 4 d'au moins une pastille adhésive 2 ou la platine 3. Plus particulièrement ces moyens de roulement peuvent être positionnés à l'intérieur dudit au moins un logement 51 que comportent, selon le cas, les moyens de dépose 4 d'au moins une pastille adhésive 2 ou la platine 3 ainsi qu'autour dudit arbre 52.

Selon une autre caractéristique (notamment conformément à ce premier type de réalisation), les moyens d'entraînement en rotation 60 comportent, d'une part, des moyens d'engrènement 61, que comportent les moyens de dépose 4 d'au moins une pastille adhésive 2 ou qui sont associés à ces moyens de dépose 4 d'au moins une pastille adhésive 2. De tels moyens d'engrènement 61 peuvent adopter la forme de dents.

D'autre part, ces moyens d'entraînement en rotation 60 comportent des moyens d'engrènement complémentaires (non représentés) qui coopèrent avec les moyens d'engrènement 61. De tels moyens d'engrènement complémentaires peuvent adopter la forme de dents ou d'un filetage.

D'autre part encore, ces moyens d'entraînement en rotation 60 comportent un moteur d'entraînement 62, qui est monté fixement sur la platine 3, et qui est configuré pour entraîner (notamment en translation ou en rotation) lesdits moyens d'engrènement complémentaires.

Selon une autre caractéristique, les moyens d'entraînement en rotation 60 comportent une couronne 63, que comportent les moyens de dépose 4 d'au moins une pastille adhésive 2 ou qui est associée à ces moyens de dépose 4 d'au moins une pastille adhésive 2, qui est solidaire en rotation de ces moyens de dépose 4 d'au moins une pastille adhésive 2, qui comporte les moyens d'engrènement 61, et qui est positionnée autour de l'arbre 52 des moyens de montage en rotation 50.

Encore une autre caractéristique concerne le fait que les moyens d'entraînement en rotation 60 comportent un organe de transmission 64, qui comporte les moyens d'engrènement complémentaires, et qui est entraîné (notamment en translation ou en rotation) par le moteur d'entraînement 62.

Un tel organe de transmission 64 peut adopter la forme d'une crémaillère, qui est entraînée en translation par le moteur d'entraînement 62, et qui s'étend selon un axe perpendiculaire à l'axe de rotation X.

De manière alternative, un tel organe de transmission 64 peut adopter la forme d'une roue ou d'un disque qui est entraîné(e) en rotation par le moteur d'entraînement 62, plus particulièrement autour d'un axe de rotation qui est parallèle à l'axe de rotation X.

Cependant et de manière préférentielle, ledit organe de transmission 64 adopte la forme d'une vis sans fin, qui s'étend selon un axe X', et qui est entraînée en rotation autour de cet axe X' qui est perpendiculaire à l'axe de rotation X des moyens de montage en rotation 50.

Une autre caractéristique concerne le fait que les moyens de dépose 4 d'au moins une pastille adhésive 2 peuvent comporter deux bras (40 ; 40') qui sont parallèles. Ces deux bras (40 ; 40') comportent, chacun, l'un desdits logements 51 des moyens de montage en rotation 50. C'est, plus particulièrement, entre ces deux bras (40 ; 40') que la couronne 63 des moyens d'entraînement en rotation 60 est interposée (cette couronne 63 est, alors, solidaire de l'un au moins de ces deux bras 40 ; 40'). De manière alternative ou (et de préférence) additionnelle, c'est, plus particulièrement, entre ces deux bras (40 ; 40') que l'organe de transmission 64 des moyens d'entraînement en rotation 60 (plus particulièrement la vis sans fin) est positionné et est mobile.

Selon un deuxième type de réalisation illustré figures 2 et 3, les moyens d'entraînement en rotation 60 comportent un moteur 65 qui comporte, d'une part, un stator qui est solidaire fixement de la platine 3, d'autre part, un rotor qui est mobile en rotation autour de l'axe de rotation X ainsi que par rapport au stator. Un tel moteur correspond, plus particulièrement, à un moteur du type moteur sur axe et/ou à un moteur à entraînement direct.

Selon ce deuxième type de réalisation, les moyens de montage en rotation 50 comportent, d'une part, au moins une partie dudit moteur 65 et, d'autre part, des moyens de fixation 53 qui sont configurés pour fixer les moyens de dépose 4 d'au moins une pastille adhésive 2 sur le rotor du moteur 65.

Encore une autre caractéristique du dispositif de dépose 1 d'au moins une pastille adhésive 2 concerne le fait que les moyens de dépose 4 d'au moins une pastille adhésive 2 comportent des moyens de préhension 41 d'au moins une pastille adhésive 2 qui sont configurés pour saisir une telle pastille adhésive 2.

De tels moyens de préhension 41 peuvent adopter la forme d'une ventouse. Le dispositif de dépose 1 d'au moins une pastille adhésive 2 comporte, alors, également, des moyens d'aspiration (non représentés), qui sont associés à ces moyens de préhension 41, et qui sont configurés pour aspirer au moins une pastille adhésive 2, ceci à partir d'un dispositif de délivrance 11 (décrit plus en détail ci-dessous) d'au moins une telle pastille adhésive 2.

Une autre caractéristique du dispositif de dépose 1 d'au moins une pastille adhésive 2 consiste, alors, en ce que ce dispositif de dépose 1 comporte des moyens de montage en translation 7 qui sont configurés pour monter les moyens de préhension 41 d'au moins une pastille adhésive 2 en translation par rapport à la platine 3, plus particulièrement selon une direction perpendiculaire à l'axe de rotation X.

Selon une autre caractéristique, les moyens de dépose 4 d'au moins une pastille adhésive 2 comportent, encore, un corps 42 qui est monté en rotation autour de l'axe de rotation X et par rapport à la platine 3 (plus particulièrement sur cette platine 3), ceci par l'intermédiaire des moyens de montage en rotation 50.

Encore une autre caractéristique concerne le fait que les moyens de dépose 4 comportent des moyens d'assemblage 43 qui sont configurés pour assembler lesdits moyens de préhension 41 d'au moins une pastille adhésive 2 et ledit corps 42.

A ce propos, on observera que le corps 42 comporte, d'une part, une première partie 420 qui est montée en rotation autour de l'axe de rotation X et par rapport à la platine 3 (plus particulièrement sur cette platine 3), ceci par l'intermédiaire des moyens de montage en rotation 50, d'autre part, une deuxième partie 421 qui est assemblée avec les moyens de préhension 41, ceci par l'intermédiaire des moyens d'assemblage 43 et, d'autre part encore, des moyens de montage en translation 422 qui sont configurés pour monter la deuxième partie 421 de ce corps 42 en translation par rapport à la première partie 420 de ce corps 42.

A ce propos, on observera que les moyens de montage en translation 7 des moyens de préhension 41 d'au moins une pastille adhésive 2 par rapport à la platine 3 comportent, alors (voire sont au moins en partie constitués par), ces moyens de montage en translation 422 de la deuxième partie 421 de ce corps 42 par rapport à la première partie 420 de ce corps 42.

Tel que mentionné ci-dessus, les moyens de dépose 4 comportent des moyens d'assemblage 43 qui sont configurés pour assembler lesdits moyens de préhension 41 d'au moins une pastille adhésive 2 et ledit corps 42.

A ce propos, on observera que ces moyens d'assemblage 43 comportent des moyens d'articulation qui sont configurés pour articuler les moyens de préhension 41 par rapport au corps 42. De tels moyens d'articulation peuvent adopter la forme d'une rotule ou analogue. De tels moyens d'articulation permettent, avantageusement, d'améliorer le positionnement des moyens de préhension 41 (et, donc, de ladite au moins une pastille adhésive 2 à déposer) par rapport à l'élément de véhicule automobile sur lequel il convient de déposer ladite au moins une pastille adhésive 2 et, ainsi, d'améliorer la précision de la dépose de ladite au moins une pastille adhésive 2 sur un tel élément de véhicule automobile. A ce propos, on observera que l'amélioration de la précision de la dépose de ladite au moins une pastille adhésive 2 permet, avantageusement, d'obturer un orifice que comporte ledit élément de véhicule automobile avec une telle pastille adhésive 2, ceci de manière appropriée pour garantir l'étanchéité à l'eau qui est, alors, plus particulièrement conforme aux exigences d'étanchéité telles qu'évaluées selon le test de la colonne d'eau de 1 mètre.

Encore une autre caractéristique concerne le fait que les moyens de dépose 4 comportent des moyens de rappel (non représentés) interposés entre les moyens de préhension 41 et le corps 42. De tels moyens de rappel peuvent adopter la forme d'un ressort. La présence de tels moyens de rappel permet, avantageusement, de repositionner les moyens de préhension 41 dans une position de préhension de référence d'au moins une pastille adhésive 2, ceci après qu'une pastille adhésive 2 ait été déposée sur un élément de véhicule automobile avec un déplacement des moyens de préhension 41 par rapport à cette position de préhension de référence.

On observera que la combinaison des moyens d'assemblage 43 (plus particulièrement comportant des moyens d'articulation, notamment sous la forme d'une rotule) et des moyens de rappel (que comportent les moyens de dépose 4) permet, avantageusement, de garantir un contact parfait entre la pastille adhésive 2 et l'élément de véhicule automobile ce qui, là encore, permet de garantir l'étanchéité à l'eau comme mentionné ci-dessus.

En ce qui concerne les moyens d'assemblage 43 mentionnés et décrits ci-dessus (plus particulièrement comportant des moyens d'articulation pouvant adopter la forme d'une rotule ou analogue), ceux-ci peuvent, également, être envisagés dans le cadre d'un dispositif de dépose 1 d'au moins une pastille adhésive 2 (plus particulièrement sur un élément de véhicule automobile) qui comporte, d'une part, une platine 3 et, d'autre part, des moyens de dépose 4 d'au moins une pastille adhésive 2 sur un élément de véhicule automobile (plus particulièrement des moyens de dépose 4 qui comportent un corps 42), selon le cas, qui sont montés fixement sur ladite platine 3 (donc en l'absence de moyens de montage en déplacement tels que décrits ci-dessus et/ou en l'absence de moyens d'entraînement en déplacement tels que décrits ci-dessus) et/ou qui sont montés en déplacement sur ladite platine 3 par l'intermédiaire de moyens de montage en déplacement (que comporte, alors, le dispositif de dépose) d'un autre type (notamment en translation) que ceux décrits ci-dessus et/ou qui sont dépourvus de moyens de montage en translation des moyens de préhension 41 et/ou que comporte un dispositif de dépose 1 d'au moins une pastille adhésive 2 qui est dépourvu de moyens de montage en translation de tels moyens de préhension 41 par rapport à la platine 3 et/ou qui comporte un corps 42 monobloc (plus particulièrement fixé sur la platine 3) et/ou qui comporte un corps 42 qui présente au moins un partie des caractéristiques décrites ci-dessus. De tels moyens d'assemblage 43 présentent, alors, les mêmes effets, les mêmes résultats et les mêmes avantages que ceux décrits ci-dessus.

De plus, de tels moyens d'assemblage 43 peuvent, avantageusement, être combinés avec des moyens de rappel (que comportent les moyens de dépose 4) tels que mentionnés et décrits ci-dessus, ceci avec les mêmes effets, les mêmes résultats et les mêmes avantages que ceux décrits ci-dessus.

L'invention concerne, également, une installation de dépose 8 d'au moins une pastille adhésive 2 sur un élément de véhicule automobile.

Selon un premier type de réalisation, cette installation de dépose 8 d'au moins une pastille adhésive 2 comporte, alors, d'une part, un robot 9 qui comporte un bras mobile, d'autre part, au moins un dispositif de dépose 1 d'au moins une pastille adhésive 2 qui est configuré pour déposer au moins une pastille adhésive 2 sur un élément de véhicule automobile et, d'autre part encore, des moyens de fixation (non représentés) qui sont configurés pour fixer ledit au moins un dispositif de dépose 1 d'au moins une pastille adhésive 2 sur le bras mobile du robot 9, notamment sur une extrémité libre que comporte le bras mobile de ce robot 9.

Selon l'invention, dans cette installation de dépose 8 d'au moins une pastille adhésive 2, ledit au moins un dispositif de dépose 1 d'au moins une pastille adhésive 2 présente au moins une partie des caractéristiques décrites ci-dessus.

En ce qui concerne les moyens de fixation, ceux-ci sont de type réversible et sont configurés pour fixer, de manière réversible, ledit au moins un dispositif de dépose 1 d'au moins une pastille adhésive 2 sur le bras mobile du robot 9, notamment sur l'extrémité libre de ce bras mobile de ce robot 9.

L'invention concerne, également, un système de dépose 10 d'au moins une pastille adhésive 2 sur un élément de véhicule automobile.

Ce système de dépose 10 d'au moins une pastille adhésive 2 comporte, d'une part, au moins un dispositif de dépose 1 d'au moins une pastille adhésive 2 qui est configuré pour déposer au moins une pastille adhésive 2 sur un élément de véhicule automobile et, d'autre part, au moins un dispositif de délivrance 11 d'au moins une pastille adhésive 2 qui est configuré pour délivrer au moins une pastille adhésive 2 audit au moins un dispositif de dépose 1 d'au moins une pastille adhésive 2.

Dans ce système de dépose 10 d'au moins une pastille adhésive 2, ledit au moins un dispositif de dépose 1 d'au moins une pastille adhésive 2 présente au moins une partie des caractéristiques décrites ci-dessus.

Selon une autre caractéristique, le système de dépose 10 d'au moins une pastille adhésive 2 comporte des moyens d'assemblage qui sont configurés pour assembler ledit au moins un dispositif de dépose 1 d'au moins une pastille adhésive 2 et ledit au moins un dispositif de délivrance 11 d'au moins une pastille adhésive 2.

A ce propos, on observera que ces moyens d'assemblage sont configurés pour assembler, d'une part, la platine 3 que comporte ledit au moins un dispositif de dépose 1 d'au moins une pastille adhésive 2 et, d'autre part, une platine 13 que comporte ledit au moins un dispositif de délivrance 11 d'au moins une pastille adhésive 2. De préférence, dans ce système de dépose 10 d'au moins une pastille adhésive 2, les platines (platine 3 dudit au moins un dispositif de dépose 1 d'au moins une pastille adhésive 2 et platine 13 dudit au moins un dispositif de délivrance 11 d'au moins une pastille adhésive 2) s'étendent selon un même plan.

Tel que mentionné ci-dessus, l'invention concerne, encore, une installation de dépose 8 d'au moins une pastille adhésive 2 sur un élément de véhicule automobile.

Selon un deuxième type de réalisation, cette installation de dépose 8 d'au moins une pastille adhésive 2 comporte, d'une part, un robot 9 qui comporte un bras mobile, d'autre part, au moins un système de dépose 10 d'au moins une pastille adhésive 2 qui est configuré pour déposer au moins une pastille adhésive 2 sur un élément de véhicule automobile et, d'autre part encore, des moyens de fixation qui sont configurés pour fixer ledit au moins un système de dépose 10 d'au moins une pastille adhésive 2 sur le bras mobile du robot 9, notamment sur une extrémité libre que comporte le bras mobile de ce robot 9.

Selon l'invention, dans cette installation de dépose 8 d'au moins une pastille adhésive 2, ledit au moins un système de dépose 10 d'au moins une pastille adhésive 2 présente au moins une partie des caractéristiques décrites ci-dessus.

En ce qui concerne les moyens de fixation, ceux-ci sont de type réversible et sont configurés pour fixer, de manière réversible, ledit au moins un système de dépose 10 d'au moins une pastille adhésive 2 sur le bras mobile du robot 9, notamment sur l'extrémité libre de ce bras de ce robot 9.

Tel que mentionné ci-dessus, l'installation de dépose 8 d'au moins une pastille adhésive 2 et/ou le système de dépose 10 d'au moins une pastille adhésive 2 comporte au moins un dispositif de délivrance 11 d'au moins une pastille adhésive 2.

Ce dispositif de délivrance 11 d'au moins une pastille adhésive 2 comporte une platine 13 qui s'étend selon un plan.

Ce dispositif de délivrance 11 comporte, également, un ensemble 14 qui comporte une bande 15 ainsi qu'au moins une pastille adhésive 2 collée sur cette bande 15. Cet ensemble 14 comporte, d'une part, une première partie 140 qui est enroulée sous la forme d'un rouleau 141 qui est monté en rotation autour d'un axe (qui est de préférence perpendiculaire au plan selon lequel la platine 3 s'étend) sur la platine 13, ceci par l'intermédiaire de moyens de montage en rotation que comporte le dispositif de délivrance 11, et, d'autre part, une deuxième partie 142 qui s'étend à partir de ce rouleau 141.

Ce dispositif de délivrance 11 comporte, aussi, des moyens de décollement 16 qui sont configurés pour décoller au moins une partie de ladite au moins une pastille adhésive 2 par rapport à ladite bande 15.

Ce dispositif de délivrance 11 comporte, encore, des moyens d'entraînement en déplacement 17 dudit ensemble 14 au moins par rapport aux moyens de décollement 16.

Ce dispositif de délivrance 11 comporte, également, des moyens d'enroulement 18 de la bande 15 après le décollement de ladite au moins une pastille adhésive 2 par rapport à ladite bande 15.

Ce dispositif de délivrance 11 comporte, en regard des moyens de décollement 16, des moyens de réception 19 qui sont configurés pour recevoir au moins une portion de ladite au moins une partie décollée de ladite au moins une pastille adhésive 2 par rapport à ladite bande 15. Ces moyens de réception 19 comportent, alors, des moyens de limitation de l'adhésion qui sont configurés pour au moins limiter (voire pour empêcher) l'adhésion de ladite au moins une partie décollée de ladite au moins une pastille adhésive 2 sur ces moyens de réception 19.

A ce propos, on observera que de tels moyens de limitation de l'adhésion peuvent comporter un revêtement, qui est en un matériau qui limite (voire qui empêche) l'adhésion, et que comportent, alors, les moyens de réception 19. De manière particulière, de tels moyens de limitation de l'adhésion peuvent alors être constitués par un tel revêtement.

De manière alternative, au moins une partie des moyens de réception 19 est en un matériau qui limite (voire empêche) l'adhésion. Ladite au moins une partie de ces moyens de réception 19 constitue, alors, les moyens de limitation de l'adhésion. Selon un mode de réalisation particulier, les moyens de réception 19 sont, au moins en partie (voire intégralement), constitués par de tels moyens de limitation de l'adhésion.

On observera que le matériau qui limite l'adhésion peut être un matériau antiadhérent, plus particulièrement du polytétrafluoroéthylène (PTFE).

Tel que mentionné ci-dessus, le dispositif de délivrance 11 comporte des moyens de réception 19 qui sont configurés pour recevoir ladite au moins une portion de ladite au moins une partie décollée de ladite au moins une pastille adhésive 2 par rapport à la bande 15. A ce propos, on observera que ces moyens de réception 19 sont, en fait, configurés pour recevoir ladite au moins une portion de ladite au moins une partie décollée de ladite au moins une pastille adhésive 2, ceci dans l'attente de la préhension (plus particulièrement par des moyens de préhension 41) d'une telle pastille adhésive 2 et de la dépose (plus particulièrement par le dispositif de dépose 1), d'une telle pastille adhésive 2 sur un élément d'un véhicule automobile, plus particulièrement sur un élément de carrosserie d'un tel véhicule automobile, notamment en vue de l'obturation d'un orifice (plus particulièrement traversant) que comporte un tel élément de véhicule automobile.

Tel que mentionné ci-dessus, le dispositif de délivrance 11 comporte des moyens de décollement 16. Selon une autre caractéristique, ces moyens de décollement 16 sont configurés en sorte que, en amont et au moins à proximité (voire au niveau) de ces moyens de décollement 16, ledit ensemble 14 (plus particulièrement la deuxième partie 142 de cet ensemble 14) s'étend selon un plan déterminé. Les moyens de réception 19 comportent, alors, une surface de réception qui est configurée pour recevoir ladite au moins une portion de ladite au moins une partie décollée de ladite au moins une pastille adhésive 2 qui s'étend selon ce plan déterminé. C'est, plus particulièrement, cette surface de réception qui comporte, alors, lesdits moyens de limitation de l'adhésion.

Une autre caractéristique concerne le fait que les moyens de décollement 16 comportent des moyens de renvoi qui sont configurés pour renvoyer la bande 15 depuis le rouleau 141 et en direction des moyens d'entraînement en déplacement 17.

De tels moyens de renvoi peuvent comporter un cylindre de renvoi, qui est de faible diamètre (plus particulièrement qui présente un diamètre compris entre 8 et 15mm), et qui est monté en rotation, sur la platine 13, autour d'un axe de rotation parallèle à l'axe de rotation du rouleau 141 et perpendiculaire au plan de la platine 13.

Cependant et selon un mode préféré de réalisation, ces moyens de renvoi comportent un élément, qui adopte une forme de coin, et qui présente deux faces qui adoptent entre elles un angle aigu.

Tel que mentionné ci-dessus, le dispositif de délivrance 11 comporte des moyens d'entraînement en déplacement 17 dudit ensemble 14.

Ces moyens d'entraînement en déplacement 17 comportent des moyens de traction 170 qui sont configurés pour exercer une traction au moins sur la bande 15.

Tel que visible sur les figures en annexe, ces moyens de traction 170 comportent, d'une part, un cylindre de traction 171, qui est monté en rotation autour d'un axe sur la platine 13, et sur au moins une partie duquel la bande 15 s'enroule et, d'autre part, des moyens (de préférence motorisés) d'entraînement en rotation 172 dudit cylindre de traction 171.

Un tel cylindre de traction 171 peut présenter une surface, qui coopère avec la bande 15, et qui comporte des moyens de friction, plus particulièrement sous la forme d'éléments en relief, notamment des stries. Ces moyens de friction permettent, avantageusement, d'améliorer l'accrochage de la bande 15 sur le cylindre de traction 171 et, ainsi, d'améliorer l'entraînement en déplacement de cette bande 15 et, donc, de l'ensemble 14.

De manière alternative ou (et de préférence) additionnelle, ce cylindre de traction 171 présente un diamètre compris entre 70 et 90mm.

De manière additionnelle, les moyens de traction 170 peuvent, encore, comporter des moyens de répulsion 173 qui sont configurés pour au moins repousser la bande 15 (dépourvue de pastille adhésive 2) en direction du cylindre de traction 171, ceci avec une force de répulsion déterminée.

En fait, ces moyens de répulsion 173 sont, plus particulièrement, configurés pour plaquer cette bande 15 contre le cylindre de traction 171, ceci avec une force de répulsion déterminée.

La présence de ces moyens de répulsion 173 permet, avantageusement, d'éviter le glissement de ladite bande 15 par rapport au cylindre de traction 171 et, ainsi, d'améliorer la traction exercée sur ladite bande 15 par les moyens de traction 170.

Ces moyens de répulsion 173 comportent, d'une part, au moins un cylindre de répulsion, d'autre part, des moyens de montage en déplacement de ce cylindre de répulsion sur la platine 13 ainsi que par rapport au cylindre de traction 171 et, d'autre part encore, des moyens (notamment motorisés) d'entraînement en déplacement de ce cylindre de répulsion, notamment en direction du cylindre de traction 171.

A ce propos, on observera que ces moyens de montage en déplacement du cylindre de répulsion comportent un levier qui présente, d'une part, une première partie qui est montée en rotation sur la platine 13 (plus particulièrement autour d'un axe de rotation parallèle à l'axe de rotation du cylindre de traction 171), d'autre part, une deuxième partie, qui s'étend à partir de la première partie, et sur laquelle (plus particulièrement à l'extrémité libre de laquelle) le cylindre de répulsion est monté (plus particulièrement en rotation, notamment en libre rotation, autour d'un axe de rotation parallèle à l'axe de rotation du cylindre de traction 171). Ce levier coopère avec les moyens d'entraînement en déplacement du cylindre de répulsion, plus particulièrement par l'intermédiaire d'une troisième partie, que comporte ce levier, qui s'étend à partir de la première partie de ce levier, et qui peut former un angle compris entre 90° et 180° avec la deuxième partie.

Finalement, on observera que ces moyens de répulsion 173 sont interposés entre le cylindre de traction 171 et les moyens d'enroulement 18 de la bande 15.

A ce propos, on observera que ces moyens d'enroulement 18 de la bande 15 peuvent comporter, d'une part, un dévidoir 180, qui est solidaire de la bande 15 (dépourvue de pastille adhésive 2), et qui est monté en rotation autour d'un axe sur la platine 13 et, d'autre part, des moyens (de préférence motorisés) d'entraînement en rotation 181 du dévidoir 180.

A ce propos, on observera que l'axe autour duquel le rouleau 141 est monté en rotation et/ou l'axe autour duquel le cylindre de renvoi est monté en rotation et/ou l'axe autour duquel le cylindre de traction 171 est monté en rotation et/ou l'axe autour duquel le cylindre de répulsion est monté en rotation et/ou l'axe autour duquel le dévidoir 180 est monté en rotation s'étend(ent) de manière perpendiculaire par rapport au plan selon lequel ladite platine 13 s'étend.

Tel que mentionné ci-dessus, le dispositif de délivrance 11 comporte un rouleau 141 qui est monté en rotation sur la platine 13. Ce dispositif de délivrance 11 peut, alors, également, comporter des moyens (de préférence motorisés) d'entraînement en rotation 111 de ce rouleau 141 autour dudit axe.

Selon une autre caractéristique, le dispositif de délivrance 11 comporte des moyens de gestion de ces moyens d'entraînement en rotation 111 du rouleau 141. De tels moyens de gestion sont, plus particulièrement, configurés pour gérer la vitesse de rotation du rouleau 141.

De manière alternative ou (et de préférence) additionnelle, le dispositif de délivrance 11 comporte des moyens de gestion des moyens d'entraînement en déplacement 17 dudit ensemble 14. De tels moyens de gestion sont, plus particulièrement, configurés pour gérer la vitesse d'entraînement en déplacement dudit ensemble 14. En fait, ces moyens de gestion sont configurés pour gérer les moyens d'entraînement en rotation 172 (notamment la vitesse de rotation du cylindre de traction 171) et/ou les moyens de répulsion 173 (notamment les moyens d'entraînement en déplacement du cylindre de répulsion, plus particulièrement la force de répulsion).

De manière alternative ou (et de préférence) additionnelle, le dispositif de délivrance 11 comporte des moyens de gestion des moyens d'enroulement 18 de la bande 15. De tels moyens de gestion sont, plus particulièrement, configurés pour gérer les moyens d'entraînement en rotation 181 que comportent ces moyens d'enroulement 18. Ces moyens de gestion sont, alors, plus particulièrement configurés pour gérer la vitesse de rotation du dévidoir 180.

Selon une autre caractéristique, le dispositif de délivrance 11 comporte des moyens de détection de la présence d'au moins une pastille adhésive 2 sur la bande 15, ceci en amont des moyens de décollement 16.

Selon encore une autre caractéristique, le dispositif de délivrance 1 comporte des moyens de détection de la présence d'au moins une pastille adhésive 2 sur les moyens de réception 19.

Tel que mentionné ci-dessus, ces moyens de réception 19 comportent une surface de réception qui est configurée pour recevoir ladite au moins une portion de ladite au moins une partie décollée de ladite au moins une pastille adhésive 2. De manière additionnelle, ces moyens de réception 19 comportent un orifice, qui débouche au niveau de ladite surface de réception, et à l'intérieur duquel ou au droit duquel les moyens de détection sont positionnés.

En ce qui concerne les moyens de détection, ceux-ci peuvent comporter au moins un capteur, plus particulièrement une pluralité de capteurs, notamment en parallèle, voire (et de préférence) en série.

De manière additionnelle, ces moyens de détection peuvent, encore, comporter au moins une fibre optique (plus particulièrement une pluralité de fibres optiques, notamment en parallèle, voire - et de préférence - en série) associée à un tel capteur.

Tel que mentionné ci-dessus, les moyens de décollement 16 sont configurés en sorte que, en amont et au moins à proximité (voire au niveau) de ces moyens de décollement 16, ledit ensemble 14 s'étend selon un plan déterminé.

Le dispositif de délivrance 11 comporte, alors, des moyens de maintien qui sont configurés pour maintenir ledit ensemble 14 en sorte que celui-ci s'étende selon ce plan déterminé. De tels moyens de maintien peuvent adopter la forme d'au moins un doigt, qui est monté sur ladite platine 13, et qui s'étend de manière perpendiculaire par rapport au plan selon lequel s'étend cette platine 13.

Tel que mentionné ci-dessus, le dispositif de délivrance 11 comporte des moyens de montage en rotation qui sont configurés pour monter ledit rouleau 141 en rotation autour dudit axe de rotation sur la platine 13, ceci de manière réversible.

De tels moyens de montage en rotation comportent, d'une part, une embase, qui est montée en rotation autour dudit axe sur la platine 13, et qui est configurée pour être entraînée en rotation par les moyens d'entraînement 111, d'autre part, un bloc, qui est fixé sur l'embase, qui est solidaire en rotation autour de l'axe de l'embase, qui adopte une forme cylindrique, qui comporte une collerette (du côté opposé à l'embase), et qui s'étend selon l'axe, d'autre part encore, une couronne annulaire rigide, qui est positionnée autour du bloc, et qui coulisse en translation selon l'axe par rapport audit bloc, d'autre part aussi, une tige filetée, qui traverse le bloc, qui s'étend selon l'axe, qui est solidaire en déplacement de la couronne annulaire rigide, d'autre part également, un écrou, qui prend appui (directement ou indirectement) contre le bloc et/ou contre la collerette, qui coopère avec la tige filetée et qui est positionné à l'opposé de l'embase par rapport au bloc qui est alors interposé entre cette embase et cet écrou, et, d'autre part encore, au moins une bague annulaire déformable élastique (plus particulièrement compressible et expansible, notamment réalisée en un matériau synthétique et/ou polymère, plus particulièrement du polyuréthane), qui est positionnée autour du bloc, et qui est interposée entre la couronne annulaire rigide et la collerette du bloc. Le rouleau comporte, alors, un mandrin, autour duquel la première partie 140 de l'ensemble 14 est enroulé, et qui est positionné autour de ladite au moins bague annulaire déformable élastique. Sous l'effet d'un actionnement (plus particulièrement du serrage) de l'écrou, la couronne annulaire rigide s'approche de l'écrou ce qui compresse axialement ladite au moins une bague annulaire déformable élastique qui s'expand radialement et prend appui contre le mandrin du rouleau 141 réalisant, ainsi, l'immobilisation de ce rouleau 141 par rapport au bloc. Sous l'effet d'un actionnement inverse (plus particulièrement du déserrage) de l'écrou, la couronne annulaire rigide s'éloigne de l'écrou ce qui détend axialement ladite au moins une bague annulaire déformable élastique qui se rétracte radialement et ne prend plus appui contre le mandrin du rouleau 141 permettant, ainsi, le retrait du rouleau 141 par rapport au bloc. Ces moyens de montage en rotation permettent, avantageusement, un montage et un démontage rapides et aisés du rouleau 141 sur la platine 13.

A ce propos, on observera que de tels moyens de montage en rotation ne sont aucunement limités au dispositif de délivrance 11 conforme à l'invention mais peuvent, également, être envisagés pour le montage en rotation autour d'un axe d'un rouleau quelconque (notamment comportant un ensemble comportant une bande ainsi que des pastilles adhésives collées sur cette bande ou autre) sur une platine quelconque.

On observera que les caractéristiques particulières du dispositif de délivrance 11 conforme à l'invention permettent, avantageusement, la réception d'un rouleau 141 qui comporte un grand nombre de pastilles adhésives 2, en particulier plus de 300 pastilles adhésives 2.

De plus, ces caractéristiques particulières, plus particulièrement les moyens de gestion (des moyens d'entraînement en rotation 111 du rouleau 141 et/ou des moyens d'entraînement en déplacement 17 de l'ensemble 14 et/ou des moyens d'enroulement 18 de la bande 15), permettent, avantageusement, une délivrance d'une pluralité de pastilles adhésives 2 au dispositif de dépose 1 de ces pastilles adhésives 2 avec une vitesse de délivrance élevée pouvant atteindre au moins une pastille adhésive 2 toutes les 3 secondes (voire toutes les 2 secondes), ceci avec une grande maîtrise, avec une grande précision, avec une grande fiabilité et avec un risque de rupture de l'ensemble 14 particulièrement réduit.

## Revendications

1. Dispositif de dépose (1) d'au moins une pastille adhésive (2) sur un élément de véhicule automobile, ce dispositif de dépose (1) d'au moins une pastille adhésive (2) comporte, d'une part, une platine (3) qui s'étend selon un plan, d'autre part, des moyens de dépose (4) d'au moins une pastille adhésive (2) qui sont configurés pour déposer au moins une pastille adhésive (2) sur un élément de véhicule automobile, d'autre part encore, des moyens de montage en déplacement (5) qui sont configurés pour monter les moyens de dépose (4) d'au moins une pastille adhésive (2) en déplacement par rapport à ladite platine (3) et, d'autre part aussi, des moyens d'entraînement en déplacement (6) qui sont configurés pour entraîner les moyens de dépose (4) d'au moins une pastille adhésive (2) en déplacement par rapport à la platine (3), **caractérisé par le fait que** les moyens de montage en déplacement (5) comportent des moyens de montage en rotation (50) qui sont configurés pour monter les moyens de dépose (4) d'au moins une pastille adhésive (2) en rotation par rapport à la platine (3) et autour d'un axe de rotation (X), tandis que les moyens d'entraînement en déplacement (6) comportent des moyens d'entraînement en rotation (60) qui sont configurés pour entraîner les moyens de dépose (4) d'au moins une pastille adhésive (2) en rotation autour de l'axe de rotation (X).

2. Dispositif de dépose (1) d'au moins une pastille adhésive (2) selon la revendication 1, **caractérisé par le fait que** les moyens de montage en rotation (50) comportent, d'une part, au moins un logement (51) que comportent les moyens de dépose (4) d'au moins une pastille adhésive (2) et, d'autre part, un arbre (52), qui est solidaire fixement de la platine (3), qui s'étend selon l'axe de rotation (X), qui est logé à l'intérieur dudit au moins un logement (51), et par rapport auquel les moyens de dépose (4) d'au moins une pastille adhésive (2) sont mobiles en rotation autour dudit axe de rotation (X).

3. Dispositif de dépose (1) d'au moins une pastille adhésive (2) selon l'une quelconque des revendications précédentes, **caractérisé par le fait que** les moyens d'entraînement en rotation (60) comportent, d'une part, des moyens d'engrènement (61) que comportent les moyens de dépose (4) d'au moins une pastille adhésive (2) ou qui sont associés à ces moyens de dépose (4) d'au moins une pastille adhésive (2), d'autre part, des moyens d'engrènement complémentaires qui coopèrent avec les moyens d'engrènement (61) et, d'autre part encore, un moteur d'entraînement (62), qui est monté fixement sur la platine (3), et qui est configuré pour entraîner lesdits moyens d'engrènement complémentaires.

4. Dispositif de dépose (1) d'au moins une pastille adhésive (2) selon la revendication 3, **caractérisé par le fait que** les moyens d'entraînement en rotation (60) comportent une couronne (63), que comportent les moyens de dépose (4) d'au moins une pastille adhésive (2) ou qui est associée à ces moyens de dépose (4) d'au moins une pastille adhésive (2), qui est solidaire en rotation de ces moyens de dépose (4) d'au moins une pastille adhésive (2), qui comporte les moyens d'engrènement (61), et qui est positionnée autour de l'arbre (52) des moyens de montage en rotation (50).

5. Dispositif de dépose (1) d'au moins une pastille adhésive (2) selon l'une quelconque des revendications 3 ou 4, **caractérisé par le fait que** les moyens d'entraînement en rotation (60) comportent un organe de transmission (64), qui comporte les moyens d'engrènement complémentaires, et qui est entraîné par le moteur d'entraînement (62).

6. Dispositif de dépose (1) d'au moins une pastille adhésive (2) selon la revendication 1, **caractérisé par le fait que** les moyens d'entraînement en rotation (60) comportent un moteur (65) qui comporte, d'une part, un stator qui est solidaire fixement de la platine (3) et, d'autre part, un rotor qui est mobile en rotation autour de l'axe de rotation (X) ainsi que par rapport au stator tandis que les moyens de montage en rotation (50) comportent, d'une part, au moins une partie dudit moteur (65) et, d'autre part, des moyens de fixation (53) qui sont configurés pour fixer les moyens de dépose (4) d'au moins une pastille adhésive (2) sur le rotor du moteur (65).

7. Dispositif de dépose (1) d'au moins une pastille adhésive (2) selon l'une quelconque des revendications précédentes, **caractérisé par le fait que** les moyens de dépose (4) comportent, d'une part, des moyens de préhension (41) d'au moins une pastille adhésive (2), d'autre part, un corps (42) qui est monté en rotation autour de l'axe de rotation (X) et par rapport à la platine (3), ceci par l'intermédiaire des moyens de montage en rotation (50) et, d'autre part encore, des moyens d'assemblage (43) qui sont configurés pour assembler lesdits moyens de préhension (41) d'au moins une pastille adhésive (2) et ledit corps (42).

8. Dispositif de dépose (1) d'au moins une pastille adhésive (2) selon la revendication 7, **caractérisé par le fait que** le corps (42) comporte, d'une part, une première partie (420) qui est montée en rotation autour de l'axe de rotation (X) et par rapport à la platine (3), ceci par l'intermédiaire des moyens de montage en rotation (50), d'autre part, une deuxième partie (421) qui est assemblée avec les moyens de préhension (41), ceci par l'intermédiaire des moyens d'assemblage (43) et, d'autre part encore, des moyens de montage en translation (422) qui sont configurés pour monter la deuxième partie (421) de ce corps (42) en translation par rapport à la première partie (420) de ce corps (42).

9. Dispositif de dépose (1) d'au moins une pastille adhésive (2) selon la revendication 7, **caractérisé par le fait que** les moyens d'assemblage (43) comportent des moyens d'articulation qui sont configurés pour articuler les moyens de préhension (41) par rapport au corps (42).

10. Dispositif de dépose (1) d'au moins une pastille adhésive (2) selon la revendication 7, **caractérisé par le fait que** les moyens de dépose (4) comportent des moyens de rappel interposés entre les moyens de préhension (41) et le corps (42).

11. Installation de dépose (8) d'au moins une pastille adhésive (2) sur un élément de véhicule automobile, cette installation de dépose (8) d'au moins une pastille adhésive (2) comporte, d'une part, un robot (9) qui comporte un bras mobile, d'autre part, au moins un dispositif de dépose (1) d'au moins une pastille adhésive (2) qui est configuré pour déposer au moins une pastille adhésive (2) sur un élément de véhicule automobile et, d'autre part encore, des moyens de fixation qui sont configurés pour fixer ledit au moins un dispositif de dépose (1) d'au moins une pastille adhésive (2) sur le bras mobile du robot (9), **caractérisée par le fait que** ledit au moins un dispositif de dépose (1) d'au moins une pastille adhésive (2) est conforme à l'une quelconque des revendications précédentes.

12. Installation de dépose (8) d'au moins une pastille adhésive (2) selon la revendication 11, **caractérisée par le fait que** les moyens de fixation sont de type réversible et sont configurés pour fixer, de manière réversible, ledit au moins un dispositif de dépose (1) d'au moins une pastille adhésive (2) sur le bras mobile du robot (9), notamment sur une extrémité libre de ce bras mobile de ce robot (9).

13. Système de dépose (10) d'au moins une pastille adhésive (2) sur un élément de véhicule automobile, ce système de dépose (10) d'au moins une pastille adhésive (2) comporte, d'une part, au moins un dispositif de dépose (1) d'au moins une pastille adhésive (2) qui est configuré pour déposer au moins une pastille adhésive (2) sur un élément de véhicule automobile et, d'autre part, au moins un dispositif de délivrance (11) d'au moins une pastille adhésive (2) qui est configuré pour délivrer au moins une pastille adhésive (2) audit au moins un dispositif de dépose (1) d'au moins une pastille adhésive (2), **caractérisé par le fait que** ledit au moins un dispositif de dépose (1) d'au moins une pastille adhésive (2) est conforme à l'une quelconque des revendications 1 à 10.

14. Système de dépose (10) d'au moins une pastille adhésive (2) selon la revendication 13, **caractérisé par le fait qu'**il comporte des moyens d'assemblage qui sont configurés pour assembler ledit au moins un dispositif de dépose (1) d'au moins une pastille adhésive (2) et ledit au moins un dispositif de délivrance (11) d'au moins une pastille adhésive (2).

15. Installation de dépose (8) d'au moins une pastille adhésive (2) sur un élément de véhicule automobile, cette installation de dépose (8) d'au moins une pastille adhésive (2) comporte, d'une part, un robot (9) qui comporte un bras mobile, d'autre part, au moins un système de dépose (10) d'au moins une pastille adhésive (2) qui est configuré pour déposer au moins une pastille adhésive (2) sur un élément de véhicule automobile et, d'autre part encore, des moyens de fixation qui sont configurés pour fixer ledit au moins un système de dépose (10) d'au moins une pastille adhésive (2) sur le bras mobile du robot (9), **caractérisée par le fait que** le système de dépose (10) d'au moins une pastille adhésive (2) est conforme à l'une quelconque des revendications 13 ou 14.

16. Installation de dépose (8) d'au moins une pastille adhésive (2) selon la revendication 15, **caractérisée par le fait que** les moyens de fixation sont de type réversible et sont configurés pour fixer, de manière réversible, ledit au moins un système de dépose (10) d'au moins une pastille adhésive (2) sur le bras mobile du robot (9), notamment sur une extrémité libre de ce bras de ce robot (9).
